# FASCICULE DE BREVET EUROPEEN

(11) **EP 4 045 190 B1**
(45) Date de publication et mention de la délivrance du brevet: **09.08.2023**
(21) Numéro de dépôt: 20803898.4
(22) Date de dépôt: 14.10.2020
(51) Int. Cl.: B02C 23/12, B02C 23/14, B03B 9/06, B07B 7/083, B07B 7/086

(54) **PROCÉDÉ ET INSTALLATION DE SÉPARATION AÉRAULIQUE EN CONTINU DE MATÉRIAUX PARTICULAIRES CONSTITUÉS D'UN MÉLANGE DE PARTICULES HÉTÉROGÈNE À LA FOIS EN GRANULOMÉTRIE ET EN DENSITÉ**
VERFAHREN UND ANLAGE ZUR KONTINUIERLICHEN LUFTTECHNISCHEN ABSCHEIDUNG VON TEILCHENMATERIAL, DAS AUS EINER MISCHUNG VON TEILCHEN BESTEHT, DIE SOWOHL IN BEZUG AUF DIE TEILCHENGRÖSSE ALS AUCH AUF DIE DICHTE HETEROGEN SIND
METHOD AND FACILITY FOR CONTINUOUS AERAULIC SEPARATION OF PARTICULATE MATERIALS CONSISTING OF A MIXTURE OF PARTICLES HETEROGENEOUS IN BOTH PARTICLE SIZE AND DENSITY

(30) Priorité: 15.10.2019 FR 1911440
(43) Date de publication de la demande: 24.08.2022
(73) Titulaire: SOCIETE FINANCIERE INDUSTRIELLE, 62400 Béthune (FR)
(72) Inventeur: LEROY, Franck, 62223 Sainte Catherine (FR); MARECHAL, Jean-François, 62131 Vaudricourt (FR)
(74) Mandataire: RVDB
(86) Numéro de dépôt international: PCT/FR2020/051821
(87) Numéro de publication internationale: WO 2021/074528

(56) Documents cités:
- EP-A1- 0 635 308
- US-A- 5 377 920
- US-A1- 2017 259 276
- US-A1- 2018 111 131

## Description

### Domaine technique de l'invention

La présente invention concerne d'une façon générale les traitements de broyage et de séparation aéraulique de matériaux particulaires, et plus particulièrement les traitements de séparation de matériaux particulaires hétérogènes en termes de taille, de densité et de forme. Elle s'applique à des domaines variés et notamment au traitement des minerais, de déchets issus du bâtiment et des travaux publics, des matières végétales ou animales (ex : biomasse, produits alimentaires), des déchets d'origine électronique, etc.

### Technique antérieure

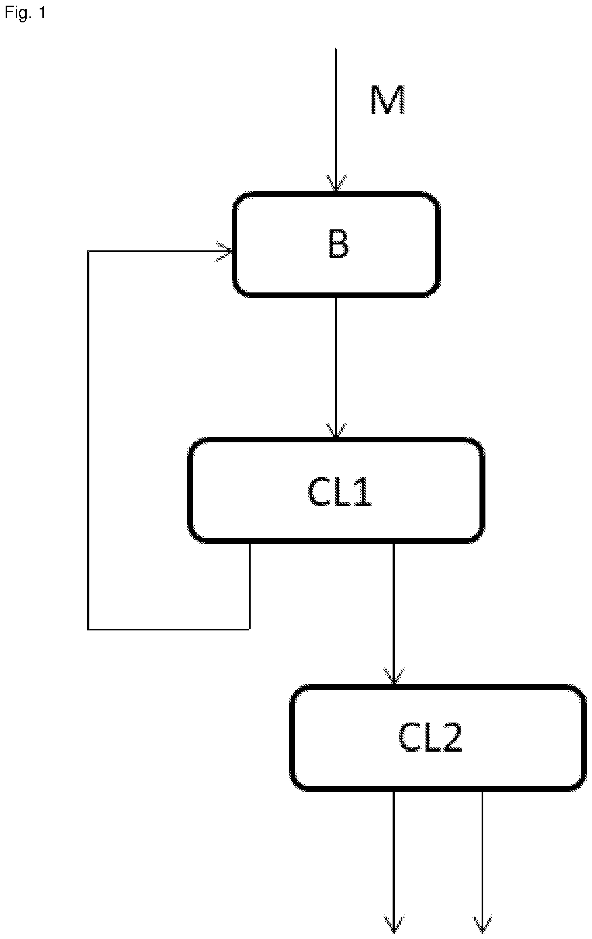

En référence à la Figure 1, les traitements de séparation de matériaux particulaires hétérogènes M en vue de séparer les uns des autres des constituants de natures différentes comprennent en général une 1^{ère} phase de broyage composée d'un broyeur B combiné à une classification CL1 par tailles destiné à séparer les particules en particules les plus grossières et en particules les plus fines jusqu'à atteindre une certaine gamme granulométrique, et une 2^{nd} phase classification CL2 successive à la 1^{ère} phase de broyage destinée à séparer les particules les plus fines et/ou les particules ayant des propriétés différentes (typiquement une classification densimétrique pour séparer les particules les plus denses des particules les moins denses). Dans certaines applications, les particules les plus denses sont des métaux que l'on souhaite récupérer à partir de déchets.

Dans une telle approche connue, les particules les plus grossières issues de la première étape de séparation sont réinjectées à l'entrée du broyeur pour être à nouveau subdivisées.

L'inconvénient notable de cette approche est l'aspect successif de CL2 qui n'entre en action qu'après la finalisation de l'action combinée de B et CL1. Ce qui peut amener dans certains cas à réduire l'efficacité de la classification CL2 ainsi que nécessiter une consommation énergétique importante pour l'action B combinée à CL1 qui doit traiter l'intégralité des matériaux. Un autre exemple de traitement de séparation de matériaux particulaires hétérogènes est décrit dans le document US 2017/259276 A1.

### Présentation de l'invention

La présente invention vise à remédier à ces inconvénients avec une approche totalement novatrice.

La présente invention vise à améliorer les procédés de séparation de matériaux hétérogènes existants et à permettre, par une nouvelle combinaison simultanée du broyage avec les 2 classifications aérauliques, de générer une fraction contenant des particules classifiées à la fois en termes de granulométrie et de densité et une autre fraction également classifiée en termes de granulométrie et de densité (par exemple, une fraction avec des particules plus fines et plus denses et une deuxième fraction avec des particules plus grossières et moins denses.

A cet effet, selon un premier aspect, la présente invention se rapporte à un procédé de séparation aéraulique en continu de matériaux particulaires constitués d'un mélange de particules hétérogène à la fois en granulométrie et en densité, caractérisé en ce qu'il comprend les étapes suivantes:
(a) broyage des particules de matériaux,
(b) génération d'un flux de gaz acheminant les particules broyées,
(c) première séparation aéraulique sur ledit flux de gaz dans une première unité de séparation aéraulique pour séparer les particules qu'il contient en une première fraction constituée de particules les plus grossières avec des densités variables, et une deuxième fraction constituée de particules les plus fines,
(d) deuxième séparation aéraulique sur ladite première fraction dans une seconde unité de séparation aéraulique pour séparer les particules qu'elle contient en une troisième fraction constituée de particules les plus grossières et/ou les plus denses et une quatrième fraction constituée de particules les moins grossières et/ou les moins denses,
(e) réinjection de la troisième fraction ou de la quatrième fraction à l'entrée du broyage, et
(f) récupération simultanée de la deuxième fraction ainsi que de la quatrième fraction ou de la troisième fraction, respectivement, comme produits de sortie.

L'invention est mise en oeuvre selon les modes de réalisation et les variantes exposées ci-après, lesquelles sont à considérer individuellement ou selon toute combinaison techniquement opérante.

Avantageusement, la première séparation aéraulique comprend une classification dynamique associée à une récupération de particules.

Selon un mode préféré de réalisation, la première fraction est récupérée hors flux de gaz et est convoyée mécaniquement vers un flux de gaz alimentant la deuxième unité de séparation aéraulique.

De même, la deuxième séparation aéraulique comprend une classification dynamique associée à une récupération de particules.

Selon un aspect particulier de la présente invention, la troisième ou la quatrième fraction est récupérée hors flux de gaz et est convoyée mécaniquement ou via le flux de gaz vers l'entrée de l'étape de broyage.

De manière plus spécifique, lorsque ce procédé est appliqué à la séparation de matériaux particulaires contenant des matériaux métalliques et des matériaux non-métalliques plus légers que les matériaux métalliques, l'étape (e) comprend la réinjection de la troisième fraction à l'entrée du broyage pour récupérer une deuxième fraction comprenant des particules de granulométrie la plus fine avec une proportion en matériaux métalliques accrue par rapport aux particules de départ, et une quatrième fraction comprenant des particules de granulométrie la grossière et la moins dense avec une proportion en matériaux non-métalliques accrue par rapport aux particules de départ.

La présente invention se rapporte également à une installation pour la séparation aéraulique en continu de matériaux particulaires constitués d'un mélange de particules hétérogène à la fois en granulométrie et en densité, caractérisée en ce qu'elle comprend:
- un broyeur alimenté par un mélange hétérogène de particules à traiter,
- un moyen pour engendrer en sortie du broyeur un flux gazeux contenant les particules issues du broyage,
- un premier classificateur aéraulique recevant ledit flux gazeux et apte à générer une première fraction contenant les particules les plus grossières avec des densités variables et une deuxième fraction contenant les particules les plus fines,
- un deuxième classificateur aéraulique recevant ladite première fraction et apte à générer une troisième fraction contenant des particules les plus grossières et/ou les plus denses et une quatrième fraction contenant des particules les moins grossières et/ou les moins denses, et
- des moyens pour convoyer la troisième fraction ou la quatrième fraction vers l'entrée du broyeur.

De préférence, le premier classificateur aéraulique comprend un classificateur dynamique associé à un récupérateur de particules.

Avantageusement, l'installation comprend en outre une conduite pour réinjecter le flux d'air propre en sortie du récupérateur à l'entrée du broyeur.

Plus précisément, comprend en outre un moyen de convoyage mécanique des particules de la première fraction jusqu'à un diffuseur interposé sur une conduite d'entrée du deuxième classificateur aéraulique.

Selon un mode particulier de réalisation, le deuxième classificateur aéraulique comprend un deuxième classificateur dynamique associé à un deuxième récupérateur de particules.

Selon un aspect spécifique, l'installation comprend en outre une conduite pour réinjecter le flux d'air propre en sortie du deuxième récupérateur de particules à l'entrée du deuxième classificateur dynamique, ou éventuellement à l'entrée du broyeur si la quatrième fraction retourne à ce dernier.

Par ailleurs, de manière complémentaire, l'installation comprend en outre un moyen de convoyage mécanique ou aéraulique des particules de la troisième ou de la quatrième fraction jusqu'à l'entrée du broyeur.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1, déjà décrite en introduction, est un schéma général d'un procédé de séparation de matière particulaire hétérogène selon l'art antérieur (phase de broyage classifié, suivi d'une phase de 2^{nd} classification),
[Fig. 2] la figure 2 est un premier schéma général d'un procédé de séparation de matière particulaire hétérogène conforme à la présente invention, dans le cas où une troisième fraction retourne au broyeur,
[FIG. 3] la figure 3 est une variante de la figure 2, dans le cas où la quatrième fraction retournant au broyeur, et
[Fig. 4] la Figure 4 illustre un exemple d'une installation pour mettre en oeuvre le procédé de la Figure 2.

### Description des modes de réalisation

On notera en introduction que les termes « grossier », « fin », « dense », « peu dense », etc., seuls ou associés à des termes comparatifs ou relatifs, sont à apprécier aux yeux de l'homme du métier, c'est-à-dire comme valeurs caractéristiques, médianes ou moyennes, d'une composition particulaire donnée, couvrant des gammes qui dans la réalité peuvent se chevaucher.

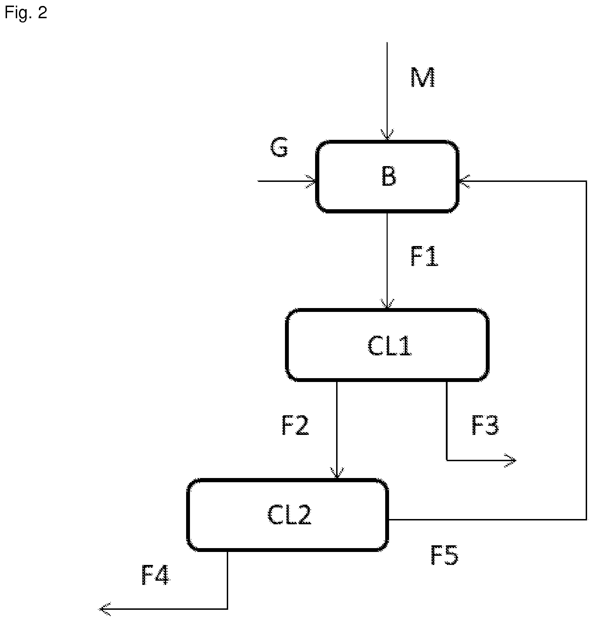

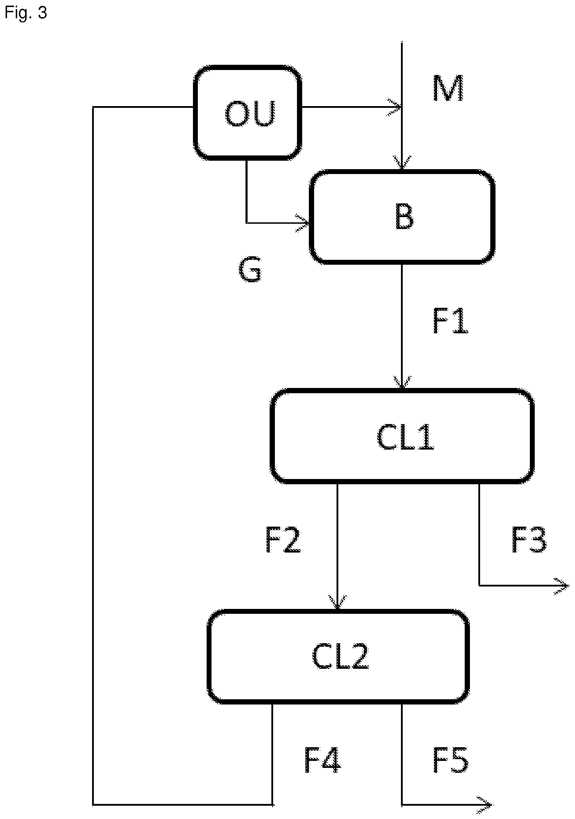

En référence tout d'abord aux Figures 2 et 3, on va décrire un procédé de séparation de matériaux particulaires selon l'invention.

De façon commune aux deux figures, le matériau de départ M, éventuellement préfractionné par des moyens connus en eux-mêmes, est introduit dans un broyeur B recevant également un flux de gaz G (typiquement de l'air ou un autre gaz) de façon à générer un flux aéraulique F1 contenant des particules dans une gamme granulométrique relativement large, avec une taille maximale par exemple inférieure à 500 µm.

Ce flux F1 est appliqué à l'entrée d'une première unité de classification CL1 destinée à séparer les particules en un flux F2 de particules les plus grossières et un flux F3 de particules les plus fines.

Contrairement au procédé de l'art antérieur où le flux F2 des particules grossières est redirigé directement à l'entrée du broyeur, ce flux est ici soumis simultanément à une seconde classification (granulométrique et/ou densimétrique) au niveau d'un deuxième classificateur CL2 qui génère un quatrième flux F4 des particules les moins grossières et/ou les moins denses et un troisième flux F5 des particules les plus grossières et/ou les plus denses.

C'est à ce niveau que le procédé peut connaître deux variantes d'implémentation, selon la nature du produit à traiter et l'application visée.

Ainsi dans une première implémentation illustrée sur la Figure 2, les particules les plus grossières et/ou les plus denses (flux F5) sont redirigées vers l'entrée du broyeur B, tandis que le flux F4 des particules les moins grossières et/ou les moins denses est récupéré à titre de produit fini ou intermédiaire.

Dans une deuxième implémentation illustrée sur la Figure 3, les particules les moins grossières et/ou les moins denses (flux F4) sont redirigées vers l'entrée du broyeur B, tandis que le flux F5 des particules les plus grossières et/ou les plus denses est récupéré à titre de produit fini ou intermédiaire.

Parallèlement, le flux F3 des particules les plus fines est récupéré pour former un autre produit fini ou intermédiaire.

L'implémentation de la Figure 2 est applicable par exemple pour récupérer des produits métalliques dans un matériau de départ constitué de déchets (déchets électroniques, déchets issus de l'industrie manufacturière en générale, du BTP, etc.). Ainsi, en alimentant le broyeur en continu avec le matériau de départ, et en extrayant rapidement car simultanément des flux traités les particules les plus légères (ici les matériaux non-métalliques : polymères, minéraux divers, etc.) dans leur état encore grossier, on obtient un procédé particulièrement efficient pour obtenir au niveau du flux F3 des particules à la fois fines et sensiblement plus concentrées en métaux (plus denses) que le matériau de départ.

Ce flux F3 constitue ainsi directement le produit fini ou intermédiaire principalement recherché.

Le flux F4, constitué selon les cas de minéraux, de polymères, etc., constitue lui aussi un autre produit fini ou intermédiaire du traitement, qui peut être réutilisé de façon appropriée selon sa nature et l'application visée, et par exemple approvisionner l'industrie du recyclage.

L'implémentation de la figure 3 est applicable notamment dans le cas où la fraction la plus recherchée du produit de départ est la fraction la moins dense (cas par exemple de coques de fruits à récupérer comme combustibles). Dans ce cas, l'extraction rapide de la fraction la plus grossière et la plus dense F5 (ici des coques de fruits, qui peuvent être par exemple palettisées pour former un combustible) permet de récupérer de façon particulièrement efficace au niveau du flux F3 un produit intermédiaire ou fini de granulométrie fine et de faible densité (ici la partie interne du fruit transformée en poudre pour application alimentaire par exemple).

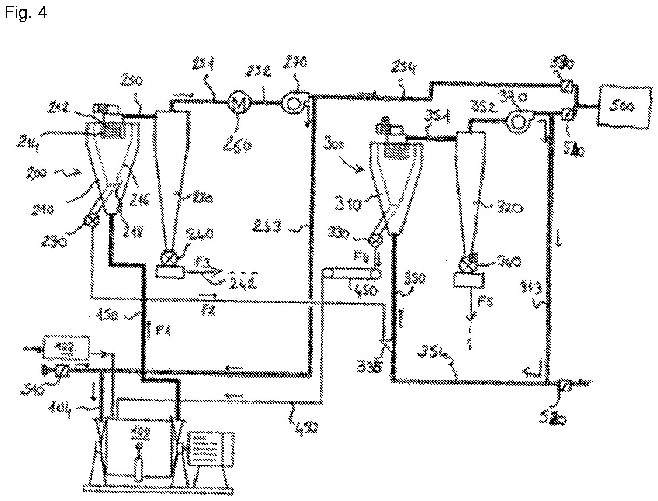

En référence maintenant à la Figure 4, on va décrire un exemple d'une installation destinée à récupérer à partir de déchets contenant d'une part des métaux et d'autre part des non-métaux moins denses que les métaux, d'une part une fraction essentiellement métallique avec une granulométrie fine, et d'autre part une fraction essentiellement non-métallique avec une granulométrie plus grossière et moins dense.

Cette installation comprend tout d'abord un broyeur 100 (broyeur B de la Figure 2) recevant en entrée (par exemple via un transporteur pneumatique, non illustré) des matières particulaires 102, par exemple des déchets électroniques pré-broyés dans une étape initiale non illustrée, dans une taille de particules comprise par exemple entre 0 et 10 mm.

Le broyeur reçoit également, via une conduite 104, un flux de gaz propre ou faiblement poussiéreux (en général de l'air) destiné à véhiculer les particules en sortie du broyeur 100.

Ce broyeur peut être réalisé selon toute technologie connue et un des procédés de broyage connus (compression, impact, attrition, selon la nature et la taille du matériau d'entrée à broyer et la finesse visée) et conçu pour réduire les fragments de départ en une poudre avec une taille de particules typiquement inférieure à 500 µm environ. D'une façon générale, cette taille de particules maximale est choisie pour assurer une séparation physique effective entre les particules métalliques et les particules non métalliques dans le matériau particulaire, en évitant autant que possible la présence de grains contenant à la fois des matériaux métalliques et des matériaux non métalliques.

Les particules en sortie du broyeur sont acheminées par le flux de gaz traversant le broyeur, dans une conduite 150 (flux F1), vers une première station de séparation aéraulique 200, cette station comprenant ici un classificateur dynamique à turbine 210, de type connu en soi, associé à un ou plusieurs récupérateurs 220 des particules contenues dans l'air, par exemple de type cyclones, filtres à manches, filtres à poches, tous connus en soi.

Le classificateur 210 comprend schématiquement un rotor 212 comportant des pales 214 tournant à une vitesse ajustée au-dessus d'une trémie de collecte 216.

Le flux d'air F1 véhiculant les particules est acheminé par la base de l'appareil à travers un espace périphérique 218 en forme d'anneau tronconique situé entre la paroi extérieure du séparateur et la trémie 216. Les particules sont assujetties au niveau des pales 214 du rotor à un effet combiné de centrifugation, d'entraînement aéraulique et de chute gravitaire, de telle sorte qu'au final les particules les plus fines traversent le rotor et sortent dans le flux d'air dans une conduite de sortie supérieure 250 du séparateur, et que les particules les plus grossières sont maintenues à l'extérieur du rotor et s'accumulent au fond de la trémie, d'où elles sont extraites par exemple par un sas alvéolaire 230.

Ce séparateur, avec une poudre contenant des métaux et des non-métaux, permet d'assurer une première récupération, dans le flux d'air sortant en partie supérieure, de fines ayant une proportion de particules métalliques sensiblement plus importante que dans le broyat de départ, avec en corollaire une proportion de particules non métalliques amoindrie, tandis que les particules plus grossières sont récupérées en bas du séparateur 210 et extraites via le sas alvéolaire 230 pour subir simultanément une seconde classification comme on va le voir dans la suite (flux F2)

La conduite 250 est reliée à l'entrée du récupérateur de particules 220, par exemple un ou plusieurs cyclones, filtres à manche ou filtres à poches, dont les paramètres sont ajustés de manière à éliminer du flux d'air la plus grande partie des fines en suspension dans celui-ci. Comme on l'a dit, ces particules sont des particules fines avec une proportion accrue en métaux, et constituent un premier produit issu du traitement. Ces particules sont récupérées par un sas alvéolaire 240 pour constituer un produit fini ou encore pour être dirigées (flèche 242) vers un autre traitement (flux F3).

Le flux d'air en sortie du récupérateur de particules 220 circule dans une conduite 251 vers un échangeur thermique 260 puis vers un ventilateur d'extraction 270 qui génère le flux d'air dans le broyeur et dans la station de séparation 200. Ce flux d'air, qui peut rester très légèrement chargé en particules, est réinjecté à l'entrée du broyeur 100 via une conduite 253. On notera ici que l'échangeur thermique 260 permet de refroidir l'air avant son retour vers l'entrée du broyeur, notamment lorsque ce dernier génère de par son principe de fonctionnement une élévation significative de la température du flux d'air et des particules transportées (chaleur de broyage). Le classificateur dynamique à turbine 210 est avantageusement du type possédant un seuil de séparation réglable, et par exemple choisi de manière à admettre en entrée une taille de particules jusqu'à 5 mm, avec un seuil de séparation granulométrique réglable entre 3 et 400 µm.

Cette première station de séparation 200 est connectée fonctionnellement à une deuxième station de séparation 300 constituée ici également d'un classificateur dynamique à turbine 310 de type connu en soi, combiné à un ou plusieurs autres récupérateurs de particules 320, de préférence du même type que le ou les récupérateurs 220.

Plus précisément, la fraction F2 issue du sas alvéolaire 230 associé au classificateur 210, constituée des particules les plus grossières à la fois métalliques et non métalliques, est acheminée par un transporteur gravitaire ou mécanique (ligne 231) et injecté via un diffuseur 335 dans un flux d'air véhiculé dans une conduite 350, qui alimente la base du classificateur 310. Ce classificateur 310 présente avantageusement la même structure que celle du classificateur 210, structure qui ne sera pas décrite à nouveau, étant rappelé que de tels classificateurs sont connus en soi. Ce classificateur est paramétré de manière à ce que les particules les plus grossières et/ou les plus denses soient maintenues à l'extérieur de la turbine et s'accumulent au fond de la trémie. Elles sont recueillies par un sas alvéolaire 330 est réinjectées via une ligne de transport gravitaire ou mécanique 450 à l'entrée du broyeur 100 (flux F5).

Les particules les moins grossières et/ou les moins denses ressortent dans le flux d'air en partie supérieure du classificateur 310. Ce flux est acheminé via une conduite 351 vers le récupérateur de particules 320 qui en extrait les particules, constituant ici un second produit issu du traitement obtenu par l'installation, à savoir une poudre relativement grossière et peu dense avec une proportion accrue de non-métaux. Celles-ci s'accumulent en partie basse et sont extraites via un sas alvéolaire 340 pour être transportées et par exemple conditionnées pour un recyclage (flux F5). La partie supérieure du récupérateur 320 est reliée par une conduite 352 à un ventilateur d'extraction 370 qui engendre le flux d'air à travers la station 300, et la sortie de ce ventilateur est reliée via des conduites 353, 354 au diffuseur 335 précité. Des registres 510, 520, 530, 540 peuvent être pilotés respectivement :
- pour permettre l'amenée d'air frais vers le broyeur via la conduite 104,
- pour permettre l'amenée d'air vers le diffuseur 335 via la conduite 354,
- pour permettre l'évacuation de l'excédent aéraulique issu du ventilateur 270, via une station de filtration 500 éliminant les dernières particules (de type connu en soi), vers l'atmosphère,
- pour permettre de la même manière l'évacuation l'excédent aéraulique issu du ventilateur 370 vers l'atmosphère via la station de filtration 500.

Ainsi l'installation de la Figure 4, par la combinaison particulière d'un broyage et simultanément d'un double étage de classifications, permet, dans recours à des étapes distinctes de classification granulométrique et de classification densimétrique, d'obtenir de façon particulièrement efficace et économique d'une part une fraction (F3) contenant les particules les plus fines avec une proportion sensiblement accrue en métaux, et d'autre part une fraction (F4) contenant les particules relativement grossières et peu denses avec une proportion sensiblement accrue en non-métaux.

## Revendications

1. Procédé de séparation aéraulique en continu de matériaux particulaires constitués d'un mélange de particules hétérogène à la fois en granulométrie et en densité, **caractérisé en ce qu'**il comprend les étapes suivantes :
(a) broyage des particules de matériaux,
(b) génération d'un flux de gaz acheminant les particules broyées,
(c) première séparation aéraulique sur ledit flux de gaz dans une première unité de séparation aéraulique pour séparer les particules qu'il contient en une première fraction constituée de particules les plus grossières avec des densités variables, et une deuxième fraction constituée de particules les plus fines,
(d) deuxième séparation aéraulique sur ladite première fraction dans une seconde unité de séparation aéraulique pour séparer les particules qu'elle contient en une troisième fraction constituée de particules les plus grossières et/ou les plus denses et une quatrième fraction constituée de particules les moins grossières et/ou les moins denses,
(e) réinjection de la troisième fraction ou de la quatrième fraction à l'entrée du broyage, et
(f) récupération simultanée de la deuxième fraction ainsi que de la quatrième fraction ou de la troisième fraction, respectivement, comme produits de sortie.

2. Procédé selon la revendication 1, **caractérisé en ce que** la première séparation aéraulique comprend une classification dynamique associée à une récupération de particules.

3. Procédé selon la revendication 1 ou la revendication 2, **caractérisé en ce que** la première fraction est récupérée hors flux de gaz et est convoyée mécaniquement vers un flux de gaz alimentant la deuxième unité de séparation aéraulique.

4. Procédé selon l'une quelconque des revendications 1 à 3, **caractérisé en ce que** la deuxième séparation aéraulique comprend une classification dynamique associée à une récupération de particules.

5. Procédé selon l'une quelconque des revendications 1 à 4, **caractérisé en ce que** la troisième ou la quatrième fraction est récupérée hors flux de gaz et est convoyée mécaniquement ou via le flux de gaz vers l'entrée de l'étape de broyage.

6. Procédé selon la revendication 1, appliqué à la séparation de matériaux particulaires contenant des matériaux métalliques et des matériaux non-métalliques plus légers que les matériaux métalliques, **caractérisé en ce que** l'étape (e) comprend la réinjection de la troisième fraction à l'entrée du broyage pour récupérer une deuxième fraction comprenant des particules de granulométrie la plus fine avec une proportion en matériaux métalliques accrue par rapport aux particules de départ, et une quatrième fraction comprenant des particules de granulométrie la plus grossière et la moins dense avec une proportion en matériaux non-métalliques accrue par rapport aux particules de départ.

7. Installation pour la séparation aéraulique en continu de matériaux particulaires constitués d'un mélange de particules hétérogène à la fois en granulométrie et en densité, **caractérisée en ce qu'**elle comprend :
- un broyeur alimenté (100) par un mélange hétérogène de particules à traiter,
- un moyen (510, 104) pour engendrer en sortie du broyeur un flux gazeux (F1) contenant les particules issues du broyage,
- un premier classificateur aéraulique (200) recevant ledit flux gazeux et apte à générer une première fraction (F2) contenant les particules les plus grossières avec des densités variables et une deuxième fraction (F3) contenant les particules les plus fines,
- un deuxième classificateur aéraulique (300) recevant ladite première fraction et apte à générer une troisième fraction (F5) contenant des particules les plus grossières et/ou les plus denses et une quatrième fraction (F4) contenant des particules les moins grossières et/ou les moins denses, et
- des moyens (450) pour convoyer la troisième fraction (F5) ou la quatrième fraction (F4) vers l'entrée du broyeur.

8. Installation selon la revendication 7, **caractérisé en ce que** le premier classificateur aéraulique (200) comprend un classificateur dynamique (210) associé à un récupérateur de particules (220).

9. Installation selon la revendication 8, **caractérisé en ce qu'**elle comprend en outre une conduite (253) pour réinjecter le flux d'air propre en sortie du récupérateur (220) à l'entrée du broyeur (100).

10. Installation selon la revendication 8 ou 9, **caractérisé en ce qu'**elle comprend en outre un moyen de convoyage mécanique des particules de la première fraction (F2) jusqu'à un diffuseur (335) interposé sur une conduite d'entrée (350) du deuxième classificateur aéraulique (300).

11. Installation selon l'une des revendications 7 à 10, **caractérisé en ce que** le deuxième classificateur aéraulique (300) comprend un deuxième classificateur dynamique (310) associé à un deuxième récupérateur de particules (320).

12. Installation selon la revendication 11, **caractérisé en ce qu'**elle comprend en outre une conduite (353) pour réinjecter le flux d'air propre en sortie du deuxième récupérateur de particules (320) à l'entrée du deuxième classificateur dynamique (310), ou éventuellement à l'entrée du broyeur (100) dans le cas où la quatrième fraction (F5) retourne à ce dernier.

13. Installation selon la revendication 11 ou 12, **caractérisé en ce qu'**elle comprend en outre un moyen de convoyage mécanique ou aéraulique des particules de la troisième ou de la quatrième fraction jusqu'à l'entrée du broyeur (100).

## Patentansprüche

1. Verfahren zur kontinuierlichen lufttechnischen Abscheidung von Teilchenmaterialien, die aus einer sowohl in Bezug auf die Teilchengröße als auch die Dichte heterogenen Teilchenmischung bestehen, **dadurch gekennzeichnet, dass** es die folgenden Schritte umfasst:
(a) Zerkleinern der Materialteilchen,
(b) Erzeugen eines Gasstroms, der die zerkleinerten Teilchen befördert,
(c) erste lufttechnische Abscheidung aus dem Gasstrom in einer ersten lufttechnischen Abscheidungseinheit, um die Teilchen abzuscheiden, die er enthält, in eine erste Fraktion, die aus den gröbsten Teilchen mit variablen Dichten besteht, und eine zweite Fraktion, die aus den feinsten Teilchen besteht,
(d) zweite lufttechnische Abscheidung aus der ersten Fraktion in einer zweiten lufttechnischen Abscheidungseinheit, um die Teilchen abzuscheiden, die sie enthält, in eine dritte Fraktion, die aus den gröbsten und/oder den dichtesten Teilchen besteht und eine vierte Fraktion, die aus den am wenigsten groben und/oder den wenigsten dichten Teilchen besteht,
(e) erneutes Einleiten der dritten Fraktion oder der vierten Fraktion in den Zerkleinerungseinlass, und
(f) gleichzeitiges Rückgewinnen der zweiten Fraktion sowie der vierten Fraktion oder beziehungsweise der dritten Fraktion als Ausgangsprodukte.

2. Verfahren nach Anspruch 1, **dadurch gekennzeichnet, dass** die erste lufttechnische Abscheidung eine dynamische Klassifizierung umfasst, die einer Teilchenrückgewinnung zugeordnet ist.

3. Verfahren nach Anspruch 1 oder Anspruch 2, **dadurch gekennzeichnet, dass** die erste Fraktion aus dem Gasstrom zurückgewonnen und mechanisch zu einem Gasstrom geleitet wird, der die zweite lufttechnische Abscheidungseinheit versorgt.

4. Verfahren nach einem der Ansprüche 1 bis 3, **dadurch gekennzeichnet, dass** die zweite lufttechnische Abscheidung eine dynamische Klassifizierung umfasst, die einer Teilchenrückgewinnung zugeordnet ist.

5. Verfahren nach einem der Ansprüche 1 bis 4, **dadurch gekennzeichnet, dass** die dritte oder die vierte Fraktion aus dem Gasstrom zurückgewonnen und mechanisch oder über den Gasstrom zum Einlass des Zerkleinerungsschritts geleitet wird.

6. Verfahren nach Anspruch 1, das auf die Abscheidung von Teilchenmaterialien angewendet wird, die metallische Materialien und nichtmetallische Materialien enthalten, die leichter als die metallischen Materialien sind, **dadurch gekennzeichnet, dass** der Schritt (e) das erneute Einleiten der dritten Fraktion in den Zerkleinerungseinlass umfasst, um eine zweite Fraktion zurückzugewinnen, die Teilchen mit der feinsten Teilchengröße mit einem erhöhten Anteil an metallischen Materialien im Verhältnis zu den Ausgangsteilchen umfasst, und eine vierte Fraktion, die Teilchen mit der gröbsten und am wenigsten dichten Teilchengröße mit einem erhöhten Anteil an nichtmetallische Materialien im Verhältnis zu den Ausgangsteilchen umfasst.

7. Anlage für die kontinuierliche lufttechnische Abscheidung von Teilchenmaterialien, die aus einer sowohl in Bezug auf die Teilchengröße als auch die Dichte heterogenen Teilchenmischung bestehen, **dadurch gekennzeichnet, dass** sie Folgendes umfasst:
- Einen Zerkleinerer (100), der mit einer heterogenen Teilchenmischung versorgt wird, die zu bearbeiten ist,
- eine Einrichtung (510, 104), um am Auslass des Zerkleinerers einen Gasstrom (F1) zu erzeugen, der die Teilchen im Ergebnis der Zerkleinerung enthält,
- einen ersten lufttechnischen Klassierer (200), der den Gasstrom empfängt und imstande ist, eine erste Fraktion (F2) zu erzeugen, die die gröbsten Teilchen mit variablen Dichten enthält, und eine zweite Fraktion (F3), die die feinsten Teilchen enthält,
- einen zweiten lufttechnischen Klassierer (300), der die erste Fraktion empfängt und imstande ist, eine dritte Fraktion (F5) zu erzeugen, die die gröbsten und/oder die dichtesten Teilchen enthält und eine vierte Fraktion (F4), die die am wenigsten groben und/oder die am wenigsten dichten Teilchen enthält, und
- Einrichtungen (450), um die dritte Fraktion (F5) oder die vierte Fraktion (F4) zum Einlass des Zerkleinerers zu befördern.

8. Anlage nach Anspruch 7, **dadurch gekennzeichnet, dass** der erste lufttechnische Klassierer (200) einen dynamischen Klassierer (210) umfasst, der einem Teilchenrückgewinner (220) zugeordnet ist.

9. Anlage nach Anspruch 8, **dadurch gekennzeichnet, dass** sie ferner eine Leitung (253) umfasst, um den am Auslass des Rückgewinners (220) sauberen Luftstrom erneut in den Einlass des Zerkleinerers (100) einzuleiten.

10. Anlage nach Anspruch 8 oder 9, **dadurch gekennzeichnet, dass** sie ferner eine Einrichtung zur mechanischen Beförderung der Teilchen der ersten Fraktion (F2) bis zu einem Diffusor (335) umfasst, der auf einer Einlassleitung (350) des zweiten lufttechnischen Klassierers (300) zwischengestellt ist.

11. Anlage nach einem der Ansprüche 7 bis 10, **dadurch gekennzeichnet, dass** der zweite lufttechnische Klassierer (300) einen zweiten dynamischen Klassierer (310) umfasst, der einem zweiten Teilchenrückgewinner (320) zugeordnet ist.

12. Anlage nach Anspruch 11, **dadurch gekennzeichnet, dass** sie ferner eine Leitung (353) umfasst, um den am Auslass des zweiten Teilchenrückgewinners (320) sauberen Luftstrom erneut in den Einlass des zweiten dynamischen Klassierers (310) oder gegebenenfalls in den Einlass des Zerkleinerers (100) einzuleiten, sofern die vierte Fraktion (F5) zu diesem zurückkehrt.

13. Anlage nach Anspruch 11 oder 12, **dadurch gekennzeichnet, dass** sie ferner eine Einrichtung zur mechanischen oder lufttechnischen Beförderung der Teilchen der dritten oder der vierten Fraktion bis zum Einlass des Zerkleinerers (100) umfasst.

## Claims

1. Method for continuous aeraulic separation of particulate materials consisting of a mixture of particles that is heterogeneous in both particle size and density, **characterised in that** it comprises the following steps:
(a) grinding particles of materials,
(b) generating a gas stream conveying the ground particles,
(c) first aeraulic separation on said gas stream in a first aeraulic separation unit in order to separate the particles it contains into a first fraction consisting of the coarsest particles with variable densities, and a second fraction consisting of the finest particles,
(d) second aeraulic separation on said first fraction in a second aeraulic separation unit in order to separate the particles it contains into a third fraction consisting of the coarsest and/or densest particles and a fourth fraction consisting of the least coarse and/or the least dense particles,
(e) reinjecting the third fraction or the fourth fraction at the inlet of the grinding, and
(f) simultaneous recovery of the second fraction as well as the fourth fraction or the third fraction, respectively, as output products.

2. Method according to claim 1, **characterised in that** the first aeraulic separation comprises a dynamic classification associated with a recovery of particles.

3. Method according to claim 1 or claim 2, **characterised in that** the first fraction is recovered out of the gas stream and is conveyed mechanically to a gas stream feeding the second aeraulic separation unit.

4. Method according to any one of claims 1 to 3, **characterised in that** the second aeraulic separation comprises a dynamic classification associated with a recovery of particles.

5. Method according to any one of claims 1 to 4, **characterised in that** the third or the fourth fraction is recovered out of the gas stream and is conveyed mechanically or via the gas stream to the inlet of the grinding step.

6. Method according to claim 1, applied to the separation of particulate materials containing metallic materials and non-metallic materials that are lighter than metallic materials, **characterised in that** step (e) comprises reinjecting the third fraction of the inlet of the grinding to recover a second fraction comprising particles of the finest particle size with an increased proportion of metallic materials relative to the initial particles, and a fourth fraction comprising particles of the coarsest and least dense particle size with an increased proportion of non-metallic materials relative to the initial particles.

7. Installation for the continuous aeraulic separation of particulate materials consisting of a mixture of particles heterogeneous both in terms of particle size and density, **characterised in that** it comprises:
- a grinder (100) fed with a heterogeneous mixture of particles to be treated,
- a means (510, 104) for generating at the outlet of the grinder a gas stream (F1) containing the particles from the grinding,
- a first aeraulic classifier (200) receiving said gas stream and capable of generating a first fraction (F2) containing the coarsest particles with variable densities and a second fraction (F3) containing the finest particles,
- a second aeraulic classifier (300) receiving said first fraction and capable of generating a third fraction (F5) containing the coarsest and/or densest particles and a fourth fraction (F4) containing the least coarse and/or least dense particles, and
- means (450) for conveying the third fraction (F5) or the fourth fraction (F4) towards the inlet of the grinder.

8. Installation according to claim 7, **characterised in that** the first aeraulic classifier (200) comprises a dynamic classifier (210) associated with a particle recuperator (220).

9. Installation according to claim 8, **characterised in that** it further comprises a pipe (253) for reinjecting the clean air stream at the outlet of the recuperator (220) at the inlet of the grinder (100).

10. Installation according to claim 8 or 9, **characterised in that** it further comprises a means for mechanically conveying the particles of the first fraction (F2) to a diffuser (335) inserted on an inlet pipe (350) of the second aeraulic classifier (300).

11. Installation according to one of claims 7 to 10, **characterised in that** the second aeraulic classifier (300) comprises a second dynamic classifier (310) associated with a second particle recuperator (320).

12. Installation according to claim 11, **characterised in that** it further comprises a pipe (353) for reinjecting the clear air stream at the outlet of the second particle recuperator (320) at the inlet of the second dynamic classifier (310), or optionally at the inlet of the grinder (100) in the case where the fourth fraction (F5) returns thereto.

13. Installation according to claim 11 or 12, **characterised in that** it further comprises a means for mechanically or aeraulically conveying particles from the third or the fourth fraction to the inlet of the grinder (100).
